# EUROPÄISCHE PATENTANMELDUNG

(11) **EP 0 809 094 A1**
(43) Veröffentlichungstag der Anmeldung: **26.11.1997**
(21) Anmeldenummer: 97108182.3
(22) Anmeldetag: 20.05.1997
(51) Int. Cl.: G01K 7/18

(54) **Verfahren zur Herstellung einer Sensoranordung für die Temperaturmessung**

(30) Priorität: 24.05.1996 DE 19621001
(71) Anmelder: Heraeus Sensor-Nite GmbH, 63450 Hanau (DE)
(72) Erfinder: Wienand, Karlheinz Dr., 63741 Aschaffenburg (DE); Söll, Eve, 60318 Frankfurt (DE); Muziol, Matthias, 63150 Heusenstamm (DE)
(74) Vertreter: Kühn, Hans-Christian

(57) **Zusammenfassung**

Die vorliegende Erfindung betrifft ein Verfahren zur Herstellung einer Sensoranordnung für die Temperaturmessung mit einem temperaturempfindlichen Meßwiderstand, der auf einem Keramiksubstrat eine dünne, metallische, nach außen elektrisch isolierte Widerstandsschicht und freiliegende Kontaktflächen aufweist, die elektrisch leitend und direkt mechanisch fest mit elektrisch voneinander isolierten, hochtemperaturfesten Leiterbahnen auf einer keramischen Platine verbunden sind, wobei der Meßwiderstand an einem Ende der Platine durch Auflegen auf eine noch feuchte, unmittelbar vor dem Bestücken auf die Platine aufgedruckte Dickfilmleitpaste und anschließendem Einbrennen kontaktiert und befestigt wird. An dem dem Meßwiderstand abgekehrten Ende der Platine sind Kontaktflächen zum Anschluß eines Steckers oder Kabels angeordnet. Der Temperatursensor, ein Standardbauteil in Form eines Flachmeßwiderstandes, wird drahtlos als SMD-Bauteil auf die keramische Platine aufgebracht. Die mit dem Verfahren hergestellte Sensoranordnung ist für Temperaturmessungen auch oberhalb 400°C geeignet. Mit wenigen standardisierten Einzelteilen und leicht automatisierbaren Arbeitsschritten ist das Verfahren kostengünstig.

## Beschreibung

Die Erfindung betrifft ein Verfahren zur Herstellung einer Sensoranordnung für die Temperaturmessung bestehend aus einem temperaturempfindlichen Meßwiderstand, der auf einem Keramiksubstrat einen dünnen Metallfilm als Widerstandsschicht und Kontaktflächen aufweist, wobei die Widerstandsschicht durch eine elektrisch isolierende Schutzschicht abgedeckt ist, die Kontaktflächen jedoch elektrisch leitend und direkt mechanisch fest mit elektrisch voneinander isolierten Leiterbahnen auf einer hochtemperaturfesten Platine verbunden sind, (wobei der Meßwiderstand an einem Ende der Platine Kontaktflächen zum Anschluß eines Steckers oder Kabels angeordnet sind).

Zum Beispiel aus DE 39 39 165 C1 oder DG 87 16 103 U1 sind Platinen als Träger für passive oder aktive Bauelemente hinlänglich bekannt. Da die meisten Bauteile Anwendungen im Temperaturbereich bis maximal 150° C finden, ist auch das Platinenmaterial meist nur für diesen Temperaturbereich ausgelegt. In der Regel handelt es sich dabei um Kunststoffe, die oftmals mit anorganischen Materialien verstärkt sind. Soweit eine drahtlose Kontaktierung der Bauteile vorgesehen ist, wie dies beispielsweise auch bei Temperaturmeßwiderständen für die Anwendung als Wärmemengenfühler (DE 44 24 630 C1) üblich ist, erfolgt diese durch Weichlote oder/und mittels leitfähiger Kleber. Diese Verbindungstechniken auf Kunststoffplatinen sind jedoch für Temperaturen oberhalb 300° C vollkommen ungeeignet.

Aus DE 295 04 105 U1 ist eine Sensoranordnung, ebenfalls für die Wärmemengenmessung, bekannt, bei der ein kurzes (15 mm Länge) Keramikblättchen als Platine verwendet wird. Da auch hier die Anwendung als Wärmemengenfühler angegeben ist, ist davon auszugehen, daß die Kontaktierung mittels Weichlot vorgesehen ist. Um eine fehlerfreie Kontaktierung mit einem Weichlot zu gewährleisten, erfordert dies einerseits einen Meßwiderstand mit vorverzinnten Kontaktflächen und außerdem mehrere Verfahrensschritte: 1.) Bedrucken der Platine mit einer Lotpaste; 2.) "Reflow"-Einbrand der Lotpaste; 3.) Aufsetzen des Meßwiderstandes auf die Lotpads der Platine, wobei ein SMD-Kleber zur Lagefixierung empfehlenswert ist; 4.) "Reflow"-Einbrand zum Verbinden und Aufschmelzen der Lotpads.
Abgesehen davon, daß Weichlot nur für Anwendungstemperaturen von höchstens 300° C geeignet ist, ist das Verfahren von vielen Einzelschritten gekennzeichnet, die die Fertigung relativ aufwendig gestalten.

Weitere Verfahren zur Herstellung von Sensoranordnungen mit Temperaturmeßwiderständen für die Hochtemperaturanwendung sind nach dem Stand der Technik, - dokumentiert z. B. in DGm 1 681 483, DGm 1 713 442, DGm 1 784 455, DGm 1 808 504, DGm 1 855 262, DBP 855 627-, so konzipiert, daß zunächst die Anschlußdrähte des Meßwiderstandes durch elektrisch isolierte Anschlußdrähte der Anschlußleitung verlängert werden. Die Verbindung von dem recht dünnen Anschlußdraht des Meßwiderstandes zum meist dickeren Anschlußdraht der Zuleitung wird durch Schweißen oder Hartlöten hergestellt. Wird eine Glasseide ummantelte Zuleitung verwendet, muß sie zunächst abisoliert werden. Um einen Kurzschluß während des Betriebszustandes aber auszuschließen, muß in irgendeiner Form eine elektrische Isolierung für die Anschlußdrähte des Meßwiderstandes und für den Bereich der Schweiß- oder Hartlotverbindung vorgesehen werden. Außerdem müssen die Anschlußdrähte entweder durch Vergußmassen oder durch spezielle keramische Formteile (siehe DGm 1 855 262) zugentlastet werden. Die elektrische Isolierung der Anschlußleitung für die Hochtemperaturanwendung wird entweder von keramischen Kapillarrohren erfüllt, die aber hohen Anteil an den gesamten Materialkosten haben und wegen ihrer geometrischen Abmessung einer Miniaturisierung oftmals im Wege stehen, - oder von Glasseideumhüllungen gewährleistet -, die herstellungsbedingt durch eine organische Tränkung versteift sind. Diese Tränkung muß in einem Extra-Ausheizprozeß entfernt werden. Zur Lagefixierung des Meßwiderstandes ist es darüber hinaus üblich, einen keramischen Kleber in die Spitze des Meßeinsatzschutzrohres einzubringen. Ein Hochtemperaturmeßeinsatz wird also nach dem Stand der Technik mit einer Vielzahl von Einzelteilen und Verfahrensschritten hergestellt, die entweder gar nicht oder nur mit großem Aufwand automatisierbar sind.

Demgegenüber liegt der Erfindung die Aufgabe zugrunde, ein aus wenigen standardisierten Einzelschritten bestehendes und aufgrund leicht automatisierbarer Prozeßschritte aus der SMD-Technik kostengünstiges Verfahren zur Herstellung einer Sensoranordnung anzugeben. Die Sensoranordnung soll zur Temperaturmessung oberhalb etwa 400° C geeignet sein.

Die Aufgabe wird erfindungsgemäß für das Verfahren zur Herstellung einer Sensoranordnung zur Temperaturmessung dadurch gelöst, daß auf die Kontaktfläche für die Kontaktierung und Befestigung des planaren temperaturabhängigen Meßwiderstandes unmittelbar vor dem Auflegen des Meßwiderstandes auf die dafür vorgesehene hochtemperaturfeste, elektrisch isolierende Platine eine noch feuchte Dickfilmleitpaste auf die Platine aufgebracht wird, auf die der Meßwiderstand mit seinen freien Kontaktflächen aufgesetzt und bei Temperaturen bis 1000° C auf der Platine eingebrannt und damit kontaktiert und befestigt wird.

Das Aufbringen der Paste kann beispielsweise durch Siebdrucken oder Aufpinseln erfolgen. Anschließend wird der Meßwiderstand in sogenannter Flipchip-Technik kontaktiert, d. h. er wird mit seinen freien Kontaktflächen ("face down") auf die entsprechenden mit feuchter Dickfilmleitpaste vorbereiteten Kontaktflächen der Trägerplatine aufgesetzt und bei Temperaturen bis circa 1000° C eingebrannt. Zusätzliche Hilfsmittel zur Lagefixierung sind bei dem erfindungsgemäßen Verfahren nicht erforderlich, da die feuchte, zähflüssige, im Siebdruckverfahren aufgedruckte Dickfilmleitpaste ein annähernd rechteckiges Profil aufweist, so daß im Gegensatz zu der sphärischen Oberfläche von Lotpads der flache Meßwiderstand nach dem Auflegen in seiner Position bleibt. Dieses Verfahren bedarf weniger Einzelschritte und ist leicht automatisierbar.

Für die Kontaktflächen zur Kontaktierung des Meßwiderstandes haben sich als oberste kontaktbildende Schicht Dickschichtpasten aus Au, AgPd, AgPt, Pt bewährt. Da der Meßwiderstand als Standardbauteil häufig mit Goldkontaktflächen ausgestattet ist, liegt die Verwendung einer Goldpaste auf der keramischen Platine nahe, zumal für diese Au-Au Verbindung Einbrenntemperaturen (in einem konventionellen Durchlaufofen) von etwa 850° C durchaus ausreichend sind.

Das Bestücken der mit Leiterbahnen und Kontaktflächen vorbereiteten, vorzugsweise keramischen Platine erfolgt bevorzugt im Mehrfachnutzen mit SMD-Bestückungsautomaten. Unmittelbar vor der Zuführung zu dem Bestückungsautomat werden die Kontaktflächen für den Meßwiderstand im Siebdruckverfahren mit einer Dickfilmleitpaste bedruckt. Auf diese noch feuchten Kontaktpads wird der Meßwiderstand so aufgesetzt, daß seine Kontaktflächen die feuchten Kontaktflächen auf der Platine bedecken. Anschließend werden die bestückten Platinen getrocknet und in einem Durchlaufofen eingebrannt. Hierdurch wird sowohl eine mechanische Befestigung des Meßwiderstandes auf der Platine über die Kontaktflächen erzielt, als auch die elektrische Verbindung zwischen Meßwiderstand und den Zuleitungen auf der Platine hergestellt. Im Anschluß daran wird der Mehrfachnutzen vereinzelt, was mittels Brechen entlang vorgeritzter Linien auf den Platinennutzen oder durch Sägen oder Lasern geschehen kann. Bei entsprechender Layout-Ausführung können auch die Meßwiderstände in einem zeilenförmigen Mehrfachnutzen auf den Platinenmehrfachnutzen aufgesetzt werden. In diesem Fall werden dann die Meßwiderstände gemeinsam mit den Platinen vereinzelt. Über eine elektrische Durchgangsprüfung, sinnvollerweise vor der Vereinzelung der bestückten Platinen können fehlerhafte oder nicht voll funktionsfähige Sensoranordnungen ermittelt und gegebenenfalls aussortiert werden. Zur Vervollständigung zu einem Meßeinsatz benötigt man nun zu dem Herzstück der bestückten Platinen nur noch zwei weitere Teile, nämlich ein Schutzrohr und einen Stecker- oder Kabelanschluß. Das Zusammenfügen dieser Teile ist mit sehr rationellen Fertigungstechniken leicht möglich. Das geschilderte Herstellungsverfahren läßt durchgängig einen hohen Automatisierungsgrad zu.

Die durch das erfindungsgemäße Verfahren hergestellte Sensoranordnung kann folgende konstruktive Merkmale aufweisen:
Von dem Meßwiderstand aus, der die Kontaktflächen überbrückt, führen mindestens zwei Leiterbahnen an das andere Ende der langgestrecken Platine, wo sich ein weiteres Paar von Kontaktflächen für den Stecker- oder Kabelanschluß befindet. Als hochtemperaturteste Werkstoffe für die Platine kommen Keramik, Glas, Glaskeramik oder ein auf seiner Oberfläche elektrisch isoliertes Metall in Frage, wobei sich Aluminiumoxid (Al₂O₃) als übliches Substratmaterial für Dickfilm- oder Dünnfilmschaltungen bewährt hat. Darüber hinaus sind auch andere oxidkeramische oder nichtoxidische keramische Werkstoffe sowie eine breite Palette von Gläsern und Glaskeramiken geeignet, soweit sie den Anforderungen an den jeweiligen Temperaturbereich (800° im Dauerbetrieb, kurzzeitig bis 1000° C) und der Temperaturwechselbeständigkeit genügen. Temperaturwechsel sind insofern zu berücksichtigen, als daß eine erfindungsgemäße Sensoranordnung beispielsweise zur Temperaturüberwachung eines pyrolytischen Reinigungsvorgangs bei Haushaltsbacköfen verwendet wird, der zyklisch bei ca. 550° C abläuft und der durch Zwangskühlung beendet bzw. unterbrochen werden kann. Ein ähnlicher Anwendungsfall stellt die Kochfeldüberwachung dar, bei der es auch zu extremen Temperaturwechseln kommen kann. Die Maximaltemperatur hierbei beträgt 750° C. Das Material für die Leiterbahnen und die Kontaktflächen, die in Dickfilm- oder/und Dünnfilmtechnik auf die vorzugsweise keramische Platine aufgebracht werden, muß ebenso den geschilderten Anforderungen entsprechen. Die Strukturierungsmöglichkeiten der Dick- und Dünnfilmtechnik erlauben eine kostengünstige Aufbringung der einfachen Schaltungsbilder im Mehrfachnutzen, wobei bei einer Substratfläche von ca. 100 x 100 mm² bis zu 35 Platinen der Größe 100 x 2,5 mm² in einem Arbeitsgang metallisiert (und bestückt) werden können.

Die Kontaktflächen für den Stecker- oder Kabelanschluß am "kalten" Ende der Platine sollten, je nach dem welche Verbindungstechnik gewählt wird, kratzfest oder/und lötbar sein. Für eine Lötverbindung kommen insbesondere Kontaktflächen aus Silber bzw. Silberpalladium in Frage, soll ein Kontakt lediglich aufgesteckt werden, kann eine Goldkontaktfläche sinnvoll sein.

Wird für eine bestimmte Einbaulage eine besonders schmale Bauform der Sensoranordnung verlangt, so kann die keramische Platine auf eine Breite von etwa 1 mm reduziert werden. In diesem Fall wird man die beiden Leiterbahnen und die Kontaktflächen für den Stecker- oder Kabelanschluß nicht mehr auf einer Seite der Platine unterbringen, sondern wird eine Leiterbahn und eine Steckerkontaktfläche auf der Rückseite der Platine anordnen. Mittels einer Durchkontaktierungsbohrung durch die Platine im Bereich des zu kontaktierenden Meßwiderstandes wird die Verbindung von der rückseitigen Zuleitungsleiterbahn zur entsprechenden Kontaktfläche für den Meßwiderstand hergestellt.

Im folgenden wird der Gegenstand der Erfindung anhand eines Ausführungsbeispiels und der Figuren 1 bis 3 näher erläutert.

Dabei zeigt:
- Figur 1: eine Sensoranordnung auf einer Keramikplatine,
- Figur 2: eine Sensoranordnung auf einer Keramikplatine mit einer Durchkontaktierung,
- Figur 3: eine Explosionszeichnung eines Temperaturmeßeinsatzes.

Das erfindungsgemäße Verfahren umfaßt beispielsweise folgende Abläufe:
Ein Aluminiumoxidsubstrat mit den Abmessungen 101,6 x 101,6 x 0,6 mm (ein 4 x 4 Zoll Standardsubstrat) weist parallele Laserritzungen im Abstand von 2,5 mm auf. Auf einer Seite des Substrats sind in den durch die Laserritzung vorgegebenen Streifen je zwei Leiterbahnen aufgebracht. Diese Leiterbahnen sind in Dick- oder Dünnschichtverfahren aufgebracht und strukturiert worden. Sie bestehen im wesentlichen aus Ag oder AgPd oder AgPt oder Pt oder Au. Diese so vorbereitete keramische Platine wird in die Aufnahme einer Siebdruckeinrichtung eingelegt. Durch eine entsprechend dimensionierte Siebmaske werden Goldkontaktflächen auf das Ende der Leiterbahnen aufgedruckt, wo der temperaturempfindliche Meßwiderstand aufgelegt werden soll. Die Abstände und Geometrien dieser Kontaktflächen richten sich nach den Abmessungen des zu plazierenden Meßwiderstandes. Für einen Meßwiderstand von der Größe 8 x 2 mm weisen die beiden 5 mm beabstandeten Kontaktflächen etwa die Abmessungen 2,5 x 1,5 mm auf. Als Dickfilmleitpaste wird beispielsweise die Goldpaste "C 5010" der Firma W.C. Heraeus GmbH verwendet. Die so mit feuchten Goldpads versehene Keramikplatine wird aus der Siebdruckvorrichtung entnommen und einem SMD-Bestückungsautomat, wie beispielsweise einer sogenannte Pick-and-place-Maschine, zugeführt. Hier wird der Meßwiderstand, in der Regel "face-down", auf die noch feuchten Goldpads auf der Platine aufgelegt. Anschließend erfolgt eine Trocknung, entweder in einem Trockenschrank oder bereits in der Trockenzone im Einlaufbereich eines Durchlaufofens, in dem auch der Einbrand durchgeführt wird. Für den Einbrand kann ein Standardeinbrennprofil gewählt werden, was für die erwähnte Goldpaste als charakteristische Kennwerte eine Geschwindigkeit von 80 mm/Minute mit einer Peaktemperatur von 800° C für 5 Minuten aufweist. Die Gesamtdurchlaufzeit beträgt 45 Minuten. Mit dieser Prozedur werden die Meßwiderstände auf der keramischen Plsatine befestigt und elektrisch kontaktiert. Es folgen nun Prüf- und Kontrollschritte, sowie die Vereinzelung der bestückten Platinenstreifen aus dem Mehrfachnutzen durch eine Brechvorrichtung.

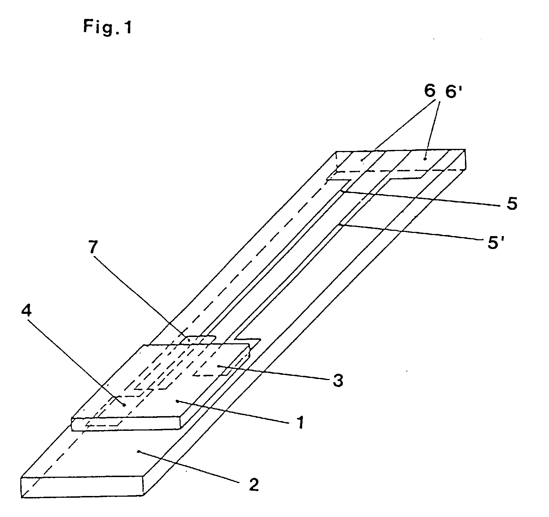

In Figur 1 ist eine Ausführungsform der mit dem erfindungsgemäßen Verfahren hergestellten Sensoranordnung zur Temperaturmessung dargestellt. Der flache Meßwiderstand 1 ist an einem Ende der Keramikplatine 2 aufgelegt. Die Kontaktflächen 3,4 auf der Platine 2 entsprechen in ihren Geometrien und Abständen denen des Meßwiderstandes 1, der durch einen Fixiereinbrand gemeinsam mit der frisch aufgetragenen Dickfilmleitpaste (zum Beispiel eine Goldpaste) befestigt und kontaktiert ist. Die Leiterbahnen 5,5' führen parallel nebeneinader zum kalten Ende der Keramikplatine 2, wo sie in Kontaktflächen 6,6' für den Stecker- oder Kabelanschluß enden. Das Leiterbahnmaterial kann beispielsweise Au, AgPt, Pt oder AgPd sein. Die oberste Schicht 3,4,6,6' der Kontaktflächen besteht vorzugsweise aus einer Au-Dickfilmpaste. Bei erhöhten Anforderungen hinsichtlich der Hochspannungsfestigkeit kann es ratsam sein, die Leiterbahnen 5,5' mit einem Dielektrikum abzudecken. Außerdem ist es, um Nebenschlüsse am Meßwiderstand 1 auszuschließen, vorteilhaft - wie auch aus der Figur 1 zu erkennen - die Leiterbahn 5, die weiter an die Spitze der Trägerplatine führt und dort in einem Kontaktpad für den Meßwiderstand endet zumindest in dem Bereich durch eine Abdeckschicht 7 zu isolieren, in dem die Leiterbahn den aufliegenden Flachmeßwiderstand tangiert. Nennwiderstände für dieses Bauteil können beispielsweise 100, 500 oder 1000 Ohm sein, je nach dem wie die kundenspezifische Applikation es vorsieht. Typische Abmessungen für die beschriebene Trägerplatine 2 sind: Länge 100 mm Breite 3 mm, Dicke 1 mm.

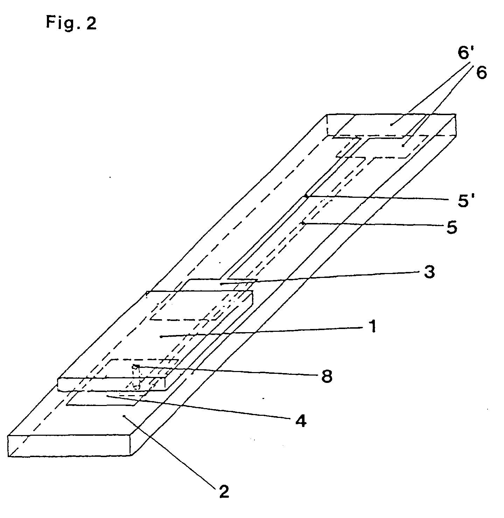

Figur 2 unterscheidet sich von Figur 1 hauptsächlich durch die Anordnung der beiden Zuleitungen 5,5' und der jeweiligen Steckerkontaktflächen 6,6'. Diese sind nicht auf einer Seite der Platine, sondern auf Vorder- und Rückseite der keramischen Trägerplatine 2 angeordnet. Die beiden Kontaktflächen 3,4 für den Flachmeßwiderstand 1 sind jedoch wie im ersten Beispiel auf einer Seite der Platine 2, wobei die Verbindung zur rückseitigen Leiterbahn 5 durch eine Durchkontaktierungsbohrung 8 gewährleistet ist. Die Durchkontaktierung 8 liegt im Bereich der zweiten Kontaktfläche 4 für den Meßwiderstand. Eine isolierende Abdeckschicht für den vom Meßwiderstand 1 abgedeckten Bereich der Platine 2 ist hier nicht nötig. Darüber hinaus ermöglicht diese Konstruktion eine besonders schmale Sensoranordnung, die typischerweise folgende Abmessungen aufweist: für die Trägerplatine 2 : 100 x 1 x 1 mm, für den Flachmeßwiderstand 1: 5 x 1 x 0,4 mm.

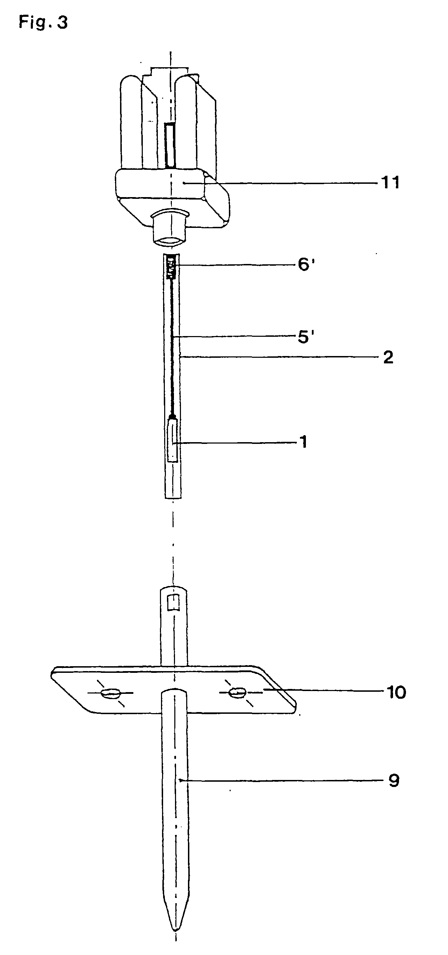

In Figur 3 ist der Aufbau eines Temperaturmeßeinsatzes mit einem Temperatursensor 1 auf einer keramischen Trägerplatine 2 dargestellt. In diesem Beispiel wird die Trägerplatine 2 aus Figur 2 verwendet. Sie wird in ein einseitig geschlossenes metallisches Schutzrohr 9 geschoben, das einen Anschlagbund 10 zur Verschraubung mit einem Gehäuseteil aufweist. Am "kalten" Ende wird ein Stecker auf die Steckerkontaktflächen 6,6' der Trägerplatine 2 aufgesteckt. Der Stecker 11 dient gleichzeitig als Verschlußelement für das metallische Schutzrohr 9.

## Patentansprüche

1. Verfahren zur Herstellung einer Sensoranordnung für die Temperaturmessung mit einem temperaturempfindlichen Meßwiderstand, der auf einem Keramiksubstrat einen dünnen Metallfilm als Widerstandsschicht und Kontaktflächen aufweist, wobei die Widerstandsschicht durch eine elektrisch isolierende Schutzschicht abgedeckt ist und die Kontaktflächen elektrisch leitend und direkt mechanisch fest mit elektrisch voneinander isolierten Leiterbahnen auf einer hochtemperaturfesten Platine verbunden sind, wobei der Meßwiderstand an einem Ende der Platine kontaktiert wird und an dem dem Meßwiderstand abgekehrten Ende der Platine Kontaktflächen zum Anschluß eines Steckers oder Kabels angeordnet sind, dadurch gekennzeichnet, daß auf die Kontaktflächen (3,4) für die Kontaktierung und die Befestigung des Meßwiderstandes (1) unmittelbar vor dem Auflegen des Meßwiderstandes (1) auf die hochtemperaturfeste Platine (2) eine noch feuchte Dickfilmleitpaste auf die Platine (2) aufgebracht wird, auf die der Meßwiderstand (1) mit seinen freien Kontaktflächen aufgesetzt und bei Temperaturen bis 1000° C auf der Platine (2) eingebrannt und damit kontaktiert und befestigt wird.

2. Verfahren zur Herstellung einer Sensoranordnung für die Temperaturmessung nach Anspruch 1, dadurch gekennzeichnet, daß für die Kontaktierung des Meßwiderstandes (1) auf der Platine (2) eine Dickfilmleitpaste verwendet wird, die Au, AgPd, AgPt, Pt enthält.
